# DEMANDE DE BREVET EUROPEEN

(11) **EP 4 043 647 A1**
(43) Date de publication de la demande: **17.08.2022**
(21) Numéro de dépôt: 22155654.1
(22) Date de dépôt: 08.02.2022
(51) Int. Cl.: E03B 3/03, B62B 1/26, B65D 90/18, F17C 13/08

(54) **COLLECTEUR D'EAU DE PLUIE MOBILE**

(30) Priorité: 10.02.2021 FR 2101249
(71) Demandeur: Poulain, Yves, 20137 Porto Vecchio (FR)
(72) Inventeur: Poulain, Yves, 20137 Porto Vecchio (FR)
(74) Mandataire: Nicolle, Olivier

(57) **Abrégé**

Collecteur mobile d'eau de pluie (1) comportant un chariot mobile (2) formé de tubes métalliques, un réservoir cylindrique à base rectangulaire (3) monté de façon amovible et ajustée sur le chariot (2) et un dérivateur d'eau de gouttière (21) adapté pour dériver de façon contrôlée de l'eau de pluie passant dans une gouttière verticale (4) vers l'extérieur de ladite gouttière (4) et vers le réservoir cylindrique à base rectangulaire (3), le réservoir cylindrique à base rectangulaire (3) comportant en outre un robinet d'évacuation (25) en partie basse, le réservoir cylindrique à base rectangulaire (3) comportant des grilles de filtrage (29) insérées dans ledit réservoir cylindrique à base rectangulaire (3) et disposées perpendiculairement à l'axe du réservoir cylindrique à base rectangulaire (3), ainsi qu'un couvercle (17) donnant accès au réservoir cylindrique à base rectangulaire (3) par le dessus, et les grilles de filtrage (29) étant supportées par quatre supports en caoutchouc (33) disposées sur chacune des quatre parois (41) du réservoir cylindrique à base rectangulaire (3), lesdits supports (33) étant rivetés à travers lesdites parois (41).

## Description

La présente invention concerne les accumulateurs d'eau de pluie permettant à l'utilisateur de collecter et réutiliser de l'eau de pluie.

La présente invention concerne les accumulateurs d'eau de pluie permettant à l'utilisateur de collecter et réutiliser de l'eau de pluie.

### ÉTAT DE LA TECHNIQUE ANTÉRIEURE

On connaît des collecteurs d'eau de pluie permettant de la réutiliser pour éviter la recycler. Les dispositifs existants ne permettent pas de s'adapter à une gouttière et de déplacer le réservoir facilement.

### RÉSUME DE L'INVENTION

L'invention a pour but de pallier au moins certains des inconvénients précités et de proposer un système capable de cumuler des avantages de rapidité, simplicité et fiabilité pour sa mise en œuvre.

Au vu de ce qui précède, l'invention a pour objet un collecteur mobile d' eau de pluie ayant un chariot mobile formé de tubes métalliques, un réservoir cylindrique à base rectangulaire monté de façon amovible et ajustée sur le chariot et un dérivateur d'eau de gouttière adapté pour dériver de façon contrôlée de l'eau d'eau de pluie passant dans une gouttière verticale vers l'extérieur de ladite gouttière et vers le réservoir cylindrique, le réservoir comportant en outre un robinet d'évacuation en partie basse.

De préférence, un tuyau reliant d'une part une sortie du dérivateur par laquelle sort l'eau qui a été dérivée de la gouttière par ledit dérivateur et d'autre part une ouverture formant une entrée du réservoir située sur une partie haute du réservoir.

Par exemple, le tuyau est un tube flexible qui est inséré dans l'ouverture.

Avantageusement, l'ouverture est munie d'un clapet monté de façon élastique dans le réservoir et à l'encontre de l'ouverture, ledit clapet étant adapté pour revenir élastiquement vers une position d'obstruction de l'ouverture lors du retrait du tuyau hors de l'ouverture.

Selon une forme de réalisation, le chariot est formé de tubes métalliques et comporte une base métallique rectangulaire ajustée à la base cylindrique rectangulaire du réservoir cylindrique pour supporter ce dernier, un châssis, formé de deux barres métalliques sensiblement parallèles reliées par au moins une barre d'appui, ledit châssis s'étendant vers le haut du réservoir cylindrique sensiblement perpendiculairement depuis la base métallique et comportant en outre une première barre de maintien adaptée pour maintenir le réservoir enserré par sa base entre ladite première barre de maintien et l'au moins une barre d'appui.

Dans un mode de réalisation, le chariot comporte en outre une deuxième barre de maintien s'étendant depuis les deux barres métalliques sensiblement parallèles formant le châssis et autour du réservoir.

Avantageusement, le chariot comporte deux roues et deux pieds adaptés pour que le chariot tienne debout lorsqu'il repose sur lesdites deux roues et lesdits deux pieds et puisse en outre rouler sur lesdites deux roues lorsque le châssis est incliné de manière à soulever les pieds à distance du sol de sorte que le chariot ne repose que sur les deux roues.

Le collecteur mobile d'eau de pluie peut comprendre en outre le chariot comporte une poignée de tirage pour faciliter l'inclinaison du châssis lorsqu'un utilisateur souhaite le faire rouler et pour faciliter le déplacement du chariot en le tirant ou en le poussant, et le réservoir comporte deux poignées de levage opposées intégrées dans deux parois opposées du réservoir.

De préférence, le réservoir comporte des grilles de filtrage insérées dans ledit réservoir et disposées perpendiculairement à l'axe du réservoir cylindrique, ainsi qu'un couvercle donnant accès au réservoir par le dessus.

L'invention concerne également un collecteur mobile d'eau de pluie dans lequel les grilles de filtrage sont supportées par quatre supports en caoutchouc disposées sur chacune des quatre parois du réservoir cylindrique à base rectangulaire, lesdits supports étant rivetés à travers lesdites parois.

### BREVE DESCRIPTION DES DESSINS

L'invention sera mieux comprise à l'étude détaillée de quelques modes de réalisation pris à titre d'exemples non limitatifs et illustrés par les dessins annexés, sur lesquels :
[Fig 1] représente le collecteur mobile de l'invention raccordé par son entrée à une gouttière.
[Fig 2] représente le collecteur vu de côté et raccordé par sa sortie à un dispositif arroseur.
[Fig 3] représente l'intérieur du réservoir et les grilles de filtrage.
[Fig 4] représente les supports des grilles de filtrage.

### DESCRIPTION DETAILLEE DES FIGURES

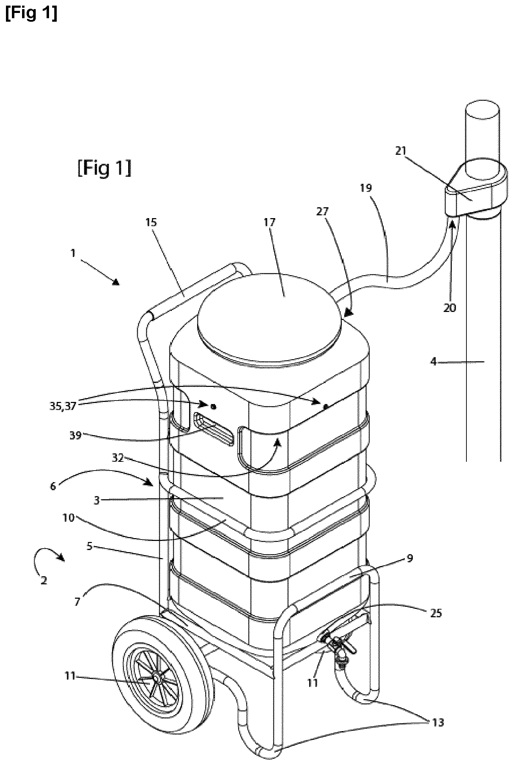

La Figure 1 illustre un collecteur d'eau de pluie selon l'invention.

Le collecteur est innovant en ce qu'il constitue un accumulateur et un collecteur d'eau de pluie qui soit mobile pour réutiliser l'eau collectée.

Pour être mobile, il comporte un chariot mobile 2 formé de tubes métalliques.

Le chariot 2 comporte par exemple deux roues 11 et deux pieds 13.

Les pieds 13 font environ cent-soixante-quinze millimètres.

Les roues 11 comportent des pneus tout-terrain gonflables de sorte que le chariot 2 puisse rouler sur de nombreux terrains facilement.

Les roues 11 ont un diamètre de l'ordre de trois-cents millimètres et sont espacés d'environ cinq-cent-soixante-douze millimètres.

Le chariot 1 est en outre d'environ quatre-cent-soixante-dix-huit millimètres de large et mille-cent millimètres de haut.

On peut en outre prévoir que le chariot 2 soit motorisé. On prévoira par exemple d'adjoindre un moteur électrique ou plusieurs pour les deux roues 11, ou un moteur électrique par roue 11, Chaque moteur est alors alimenté électriquement par une batterie. La batterie (non représentée) est préférentiellement placée au-dessous du chariot 2, et les moteurs en lien direct ou indirect avec les roues de sorte que les arbres de sorties d'entrainement en rotation axiale de ces moteurs engrènent la rotation des roues 11 par leur moyeu central. Bien sûr, on peut prévoir tout type de couple alimentation / motorisation adéquat pour faciliter le déplacement du chariot 2, sans sortir du cadre de l'invention, ainsi que des éléments de commande de la motorisation pour contrôler son activation ou non en fonction du besoin d'entrainement en déplacement.

Comme illustré, les pieds 13 et les roues 11 sont adaptés pour que le chariot 2 tienne debout lorsqu'il repose sur lesdites deux roues 11 et lesdits deux pieds 13 et puisse en outre rouler sur lesdites deux roues 11 lorsque le châssis 5 est incliné de manière à soulever les pieds 13 à distance du sol de sorte que le chariot 2 ne repose que sur les deux roues 11.

Le réservoir 3 est un réservoir cylindrique à base rectangulaire, d'environ cent litres, ce qui correspond à un volume adapté pour une manoeuvrabilité adéquate du collecteur 1 par un utilisateur sur les roues 11 lorsqu'il est plein. Il est formé d'un matériau en plastique, ce qui permet sa fabrication à coût réduit, par exemple par thermoformage et/ou injection plastique.

Il est monté de façon amovible et ajustée sur le chariot 2.

Un dérivateur d'eau de gouttière 21 adapté pour dériver de façon contrôlée de l'eau d'eau de pluie passant dans une gouttière verticale 4 est prévu.

L'invention peut également s'adapter sur un tuyau ou un autre type de gouttière.

Le dérivateur 21 est prévu pour s'adapter à une large gamme de gouttières ou tuyaux de différentes tailles et formes, de manière à pouvoir être facilement monté et démonté de la gouttière 4.

Le dérivateur 21 envoie l'eau traversant l'intérieur de la gouttière 4 vers l'extérieur de ladite gouttière 4 et vers le réservoir cylindrique 3.

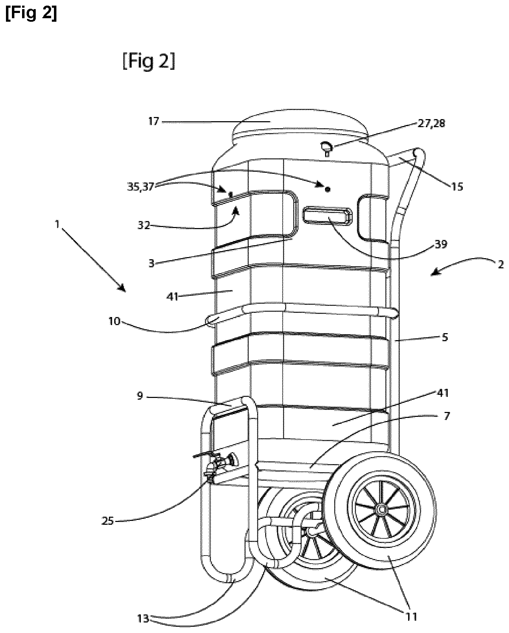

Comme illustré par la Figure 2, on peut prévoir par exemple un tuyau 19 reliant d'une part une sortie 20 du dérivateur 20 par laquelle sort l'eau qui a été dérivée de la gouttière 4 par ledit dérivateur 20 et d'autre part une ouverture 27 formant une entrée du réservoir 3 située sur une partie haute du réservoir 3.

Par exemple, le tuyau 19 est un tube flexible qui est inséré dans l'ouverture 27.

L'ouverture 27 peut être muni d'un clapet 28 monté de façon élastique dans le réservoir 3 et à l'encontre de l'ouverture 27, ledit clapet 28 étant adapté pour revenir élastiquement vers une position d'obstruction de l'ouverture 27 lors du retrait du tuyau 19 hors de l'ouverture 27. On referme ainsi automatiquement l'ouverture 27 en enlevant le tuyau 19 de celle-ci. Le clapet 28 peut être monté mobile simplement en étant monté pivotant sur le réservoir et revenir vers le bas, dans sa position d'obstruction de l'ouverture 27, par gravité. On peut classiquement prévoir en alternative des éléments de rappel élastiques tels que des ressorts.

La Figure 2 montre que le réservoir 3 comporte en outre un robinet d'évacuation 25 en partie basse qui constitue une sortie d'eau pour le réservoir 3.

Ce robinet 25 peut servir à utiliser l'eau de pluie, par exemple pour arroser des plantes d'extérieur directement depuis le robinet 25 ou en remplissant au préalable un contenant tel qu'un arrosoir.

Il est par exemple réalisé en un matériau comportant du métal lourd, par exemple du laiton ou du laiton chromé et éventuellement en partie en plastique.

On peut donc débrancher le tuyau 19 du réservoir 3, emmener facilement le réservoir 3 jusqu'au lieu d'arrosage grâce au chariot 2 spécialement adapté pour cela, et se servir du robinet 25, par exemple en reliant à celui-ci un tuyau d'arrosage standard.

Comme illustré, le chariot 2 peut être formé de tubes métalliques.

Ces tubes métalliques font environ vingt-deux millimètres de diamètre et comportent de l'acier inoxydable.

Il comporte notamment une base métallique rectangulaire 7 ajustée à la base cylindrique rectangulaire du réservoir cylindrique 3 pour supporter ce dernier.

Le chariot 2 comporte un châssis 5, formé de deux barres métalliques sensiblement parallèles reliées par au moins une barre d'appui 6. Préférentiellement, deux à trois barres d'appui 6 parallèles sont prévues.

Le châssis 5 s'étend vers le haut du réservoir cylindrique 3 sensiblement perpendiculairement depuis la base métallique 7.

Le châssis 5 comporte en outre une première barre de maintien 9 adaptée pour maintenir le réservoir 3 enserré par sa base entre ladite première barre de maintien 9 et l'au moins une barre d'appui 6, ce qui permet la bonne tenue en position du réservoir 3.

Celle-ci peut être encore améliorée si le chariot 2 comporte en outre une sangle entourant le réservoir 3 et le châssis 5, ou une deuxième barre de maintien 10 s'étendant depuis les deux barres métalliques sensiblement parallèles formant le châssis et autour du réservoir 3.

Le chariot 2 comprendre également une poignée de tirage 15 pour faciliter l'inclinaison du châssis 5 lorsqu'un utilisateur souhaite le faire rouler et pour faciliter le déplacement du chariot 2 en le tirant ou en le poussant.

La poignée 15 peut comporter du caoutchouc pour améliorer le confort de la préhension.

Le réservoir 3 peut comporter deux poignées de levage opposées 39 intégrées dans deux parois opposées du réservoir 3.

Le réservoir 3 peut comporter en outre des nervures et reliefs 32 permettant de faciliter le déplacement du réservoir 3, ainsi que d'optimiser son transport et stockage.

Le réservoir 3 peut comporter en outre un couvercle 17 donnant accès au réservoir 3 par le dessus.

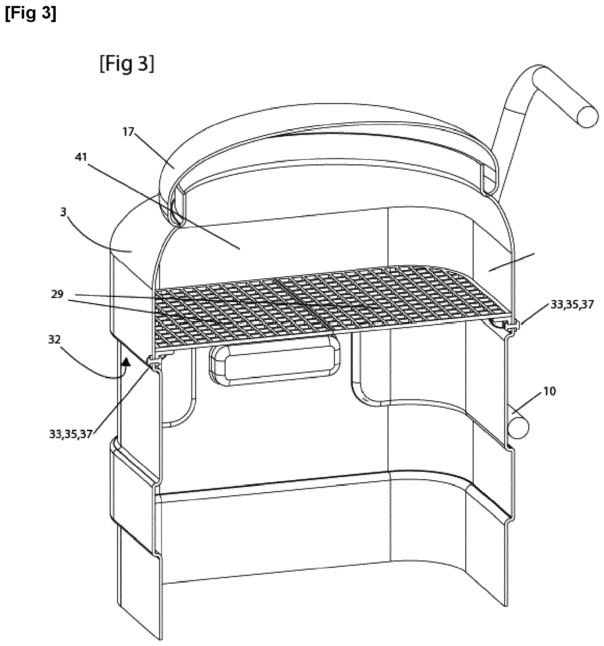

Comme illustré par la Figure 3, le réservoir peut comporter des grilles de filtrage 29 insérées dans ledit réservoir et disposées perpendiculairement à l'axe du réservoir cylindrique 3.

Les grilles de filtrage 29 comportent par exemple deux pièces en plastique symétriques et amovibles.

Le filtrage permet de tamiser l'eau de pluie entrant dans le réservoir 3 et d'empêche les feuilles ou débris de boucher la sortie d'eau 25.

Grâce au couvercle 17, monté par exemple par vissage sur le réservoir 3, l'utilisateur peut ouvrir le réservoir 3 et nettoyer les grilles de filtrage 29 et retirer les débris accumulés.

Ouvrir le couvercle 17 permet également de laisser la pluie entrer directement dans le réservoir 3 en cas de pluie, en plus de l'utilisation de l'entrée 27.

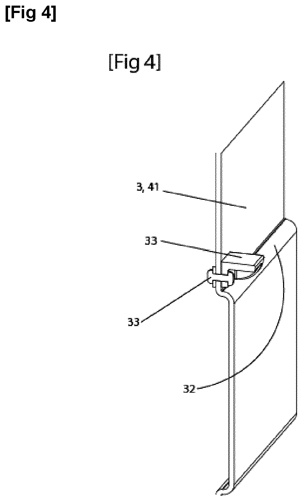

Comme illustré par la Figure 4, les grilles de filtrage 29 sont supportées par quatre supports en caoutchouc 33 disposées sur chacune des quatre parois 41 du réservoir cylindrique à base rectangulaire 3, lesdits supports 33 étant rivetés à travers lesdites parois 41.

Ces supports 33 sont donc fixés au réservoir 3, dans celui-ci, par un rivet 35, lequel est ajusté par un œillet en caoutchouc 37 placé à l'extérieur du réservoir 3 entre une tête de rivet extérieure du rivet 35, tandis que le support 33 est maintenu en position par rapport à la paroi 41 par une tête de rivet intérieure du rivet 35.

## Revendications

1. Collecteur mobile d'eau de pluie (1) comportant un chariot mobile (2) formé de tubes métalliques, un réservoir cylindrique à base rectangulaire (3) monté de façon amovible et ajustée sur le chariot (2) et un dérivateur d'eau de gouttière (21) adapté pour dériver de façon contrôlée de l'eau de pluie passant dans une gouttière verticale (4) vers l'extérieur de ladite gouttière (4) et vers le réservoir cylindrique à base rectangulaire (3), le réservoir cylindrique à base rectangulaire (3) comportant en outre un robinet d'évacuation (25) en partie basse, **caractérisé en ce que** le réservoir cylindrique à base rectangulaire (3) comporte des grilles de filtrage (29) insérées dans ledit réservoir cylindrique à base rectangulaire (3) et disposées perpendiculairement à l'axe du réservoir cylindrique à base rectangulaire (3), ainsi qu'un couvercle (17) donnant accès au réservoir cylindrique à base rectangulaire (3) par le dessus, et **en ce que** les grilles de filtrage (29) sont supportées par quatre supports en caoutchouc (33) disposées sur chacune des quatre parois (41) du réservoir cylindrique à base rectangulaire (3), lesdits supports (33) étant rivetés à travers lesdites parois (41).

2. Collecteur mobile d'eau de pluie (1) selon la revendication 1, comportant un tuyau (19) reliant d'une part une sortie (20) du dérivateur (20) par laquelle sort l'eau qui a été dérivée de la gouttière (4) par ledit dérivateur (20) et d'autre part une ouverture (27) formant une entrée du réservoir (3) située sur une partie haute du réservoir (3).

3. Collecteur mobile d'eau de pluie (1) selon la revendication 2, dans lequel le tuyau (19) est un tube flexible qui est inséré dans l'ouverture (27).

4. Collecteur mobile d'eau de pluie (1) selon la revendication 3, dans lequel l'ouverture (27) est munie d'un clapet (28) monté de façon élastique dans le réservoir (3) et à l'encontre de l'ouverture (27), ledit clapet (28) étant adapté pour revenir élastiquement vers une position d'obstruction de l'ouverture (27) lors du retrait du tuyau (19) hors de l'ouverture (27).

5. Collecteur mobile d'eau de pluie (1) selon l'une quelconque des revendications précédentes, dans lequel le chariot (2) est formé de tubes métalliques et comporte une base métallique rectangulaire (7) ajustée à la base cylindrique rectangulaire du réservoir cylindrique (3) pour supporter ce dernier, un châssis (5), formé de deux barres métalliques sensiblement parallèles reliées par au moins une barre d'appui (6), ledit châssis (5) s'étendant vers le haut du réservoir cylindrique (3) sensiblement perpendiculairement depuis la base métallique (7) et comportant en outre une première barre de maintien (9) adaptée pour maintenir le réservoir (3) enserré par sa base entre ladite première barre de maintien (9) et l'au moins une barre d'appui (6).

6. Collecteur mobile d'eau de pluie (1) selon la revendication 5, dans lequel le chariot (2) comporte en outre une deuxième barre de maintien (10) s'étendant depuis les deux barres métalliques sensiblement parallèles formant le châssis et autour du réservoir (3).

7. Collecteur mobile d'eau de pluie (1) selon la revendication 6, dans lequel le chariot (2) comporte deux roues (11) et deux pieds (13) adaptés pour que le chariot (2) tienne debout lorsqu'il repose sur lesdites deux roues (11) et lesdits deux pieds (13) et puisse en outre rouler sur lesdites deux roues (11) lorsque le châssis (5) est incliné de manière à soulever les pieds (13) à distance du sol de sorte que le chariot (2) ne repose que sur les deux roues (11).

8. Collecteur mobile d'eau de pluie (1) selon la revendication 7, dans lequel le chariot (2) comporte une poignée de tirage (15) pour faciliter l'inclinaison du châssis (5) lorsqu'un utilisateur souhaite le faire rouler et pour faciliter le déplacement du chariot (2) en le tirant ou en le poussant, et le réservoir comporte deux poignées de levage opposées (39) intégrées dans deux parois opposées du réservoir (3).
